# EUROPEAN PATENT SPECIFICATION

(11) **EP 2 718 548 B1**
(45) Date of publication and mention of the grant of the patent: **17.05.2017**
(21) Application number: 12796819.6
(22) Date of filing: 06.06.2012
(51) Int. Cl.: F01L 5/08, F01L 5/10, F01L 7/02, F01L 7/06, F02B 19/10, F01L 1/44

(54) **VALVE SYSTEM FOR A GAS ENGINE**
VENTILSYSTEM FÜR EINEN GASMOTOR
SYSTÈME DE SOUPAPES POUR MOTEUR À GAZ

(30) Priority: 08.06.2011 RO 201100831
(43) Date of publication of application: 16.04.2014
(73) Proprietor: Bergen Engines AS, 5808 Bergen (NO)
(72) Inventor: HOVEMOEN, John, Einar, N-5918 Frekhaug (NO); VAKTSKJOLD, Erlend, N-5956 Hundvin (NO)
(74) Representative: Acapo AS
(86) International application number: PCT/NO2012/000044
(87) International publication number: WO 2012/169899

(56) References cited:
- EP-A1- 0 676 533
- CN-U- 2 067 760
- FR-A1- 2 354 447
- GB-A- 406 748
- GB-A- 532 572
- GB-A- 668 977
- JP-A- 7 259 519
- JP-A- 8 270 453
- JP-A- 9 158 733
- JP-A- S59 183 020
- JP-A- 2003 138 917
- US-A- 850 175
- US-A- 5 954 274

## Description

The present invention relates to a valve system for a gas engine, comprising a number of valves that are arranged to regulate the amount and supply of gas into an inlet manifold in the engine.

The invention relates, in the main, to a valve control of a lean burn gas engine even if the invention in principle can also be used in other gas engines. In a lean burn gas engine (Otto engine) the cylinder is filled with a homogeneous, lean mixture of air and fuel gas. To achieve a steady and safe ignition of the charge an ignition re-enforcer is often used in the form of a pre-combustion chamber, where the charge is made richer in that fuel gas is supplied through a separate pre-combustion chamber gas valve, and where an ignition device in the form of, for example, a sparkplug or pilot injection valve is placed. In this context it is important to get the relative amount of energy that is released in the pre-combustion chamber as small as possible. The reason for this is that the pre-combustion chamber is a considerable contributor to the formation of NOₓ during the combustion. Additionally, the pre-combustion chamber is subjected to high thermic loads and requires cooling. Reduced size and the resulting reduced amount of energy released in the pre-combustion chamber also leads to a gain in the form of a lower thermal load and reduced wear on the ignition device and the pre-combustion chamber valve.

The pre-combustion chamber of such gas engines is, of course, known from before. However, it is a disadvantage with most of the solutions that a relatively large amount of rich charge mixture must be used, which thereby contributes to the formation of much NOₓ during the combustion. The use of a relatively large amount of rich charge leads to the development of much heat in the pre-combustion chamber. This, in turn, leads to that the thickness of the material, quality of the material, etc., for a pre-combustion chamber must be increased to adjust to the heat generation. The complexity and production costs will thereby also increase, of course.

The applicant has produced and delivered so called lean burn medium speed gas engines for many years. A number of engines have been delivered, all with mainly the same type of valves to regulate the amount of fuel and lead the gas into the inlet manifold during the suction stroke:
1. Pilot controlled pressure regulating valve placed close to the engine, one valve per engine. The pressure regulating valve gets its pilot pressure from the actual engine load.
2. Control valve, one valve per cylinder unit.
   All valves on the engine are actuated from a common actuator, where this is generally controlled as a part of a regulating loop with the engine speed of revolutions as the primary variable.
3. Admission valve, one valve per cylinder unit. Each valve is mechanically connected to respective lifting arrangements for suction valves so that the control valve opens after the air valves open and closes before the air valves close.

The three types of valves are normally arranged in series in the same order as given above with a pipe piece between them. The pipe between the pressure regulating valve and the control valve is referred to as the gas manifold, and the pressure in this volume is referred to as the main gas pressure.

When the admission valve opens, the gas that occupies the volume between the admission valve and control valve will expand from the main gas pressure to the pressure of the inlet manifold through the admission valve. This amount of gas cannot be controlled by the control valve. To reduce this amount of uncontrolled gas the main gas pressure can be reduced or the volume between the admission valve and the control valve can be reduced. A high pressure combined with little volume means that transitions from high load to low load and vice-versa, can be controlled to a larger extent by the control valve alone. This leads to a quick and precise control over the amount of gas to the engine.

An object of the present invention is therefore to provide a valve control for gas engines where the volume between the valves is considerably reduced so that a more precise control of the amount of gas to the engine can be achieved.

A gas engine has normally a relatively large pipe for fuel gas along the engine. From this pipe a smaller and possibly flexible pipe normally runs into each cylinder unit. In addition, there is normally a pipe along the engine for the pre-combustion chamber. Smaller pipes run into each cylinder unit from this pipe too. On engines delivered for power generation on land, these pipes are produced by welding and soldering.

A new market for the gas engine industry over the last years is ships using gas as a fuel. This is a new market because of the regulations for exhaust discharges, changes in taxes and the construction of an infrastructure for gas fuelling. When one places a gas engine in a ship it will be subjected to regulations according to classifications and from the authorities. One of these regulations is that all gas pipes shall be double walled where the inner pipe is used to feed the gas to the engine, and the outer pipe is used to detect any leaks from the inner pipe. This can possibly be carried out by a through-flow of air with a gas sensor in the system or a pressurised inert gas system. The space between the outer and the inner pipe must run all the way along the main pipe and out to every side line to the cylinders. This is the case for the main gas as well as the pre-chamber combustion gas.

For gas engines, where there is a requirement of double pipe guiding for gas, traditional placing of the control valve leads to this having to be formed as a housing with two shells, with double seals and monitoring of all joints and through passages. This leads to a complicated and costly construction.

A further object of the present invention is therefore to provide a solution where the valves are built into the engine so that there will be no requirements for double pipe guides.

From the patent literature reference is made, among others, to DE 427 191 C that shows a valve system for a gas engine with a number of valves to regulate the amounts and supply of gas into the inlet channel in the engine. FR 2354447A shows a linearly movable admission valve and a surrounding control valve, but where the control valve cannot rotate. GB 392863 A shows a technical solution relating to how a rotating valve is driven round with the help of a cogged wheel. GB 532 572 shows a concentric rotary values arrangement.

The above mentioned objects are achieved with a system as given in claim 1 in that the system comprises a valve housing equipped with a centrally placed and linearly moving admission valve and a surrounding control valve, where the control valve is arranged to rotate to regulate the amount of gas that is released into the valve housing.

Alternative embodiments are given in the dependent claims.

The admission valve can be shaped as a linearly moving valve stem with a lower valve disc arranged to close against a valve seat for the control of the gas supply to the inlet manifold, and where an upper part of the valve stem extends out through an upper boring in the valve -housing.

The control valve can be formed as a downwardly extending and open valve cup, in which the upper part of the admission valve extends through a boring in the bottom of the valve cup. The valve cup of the control valve can comprise, at least, one side opening which during rotation of the cup is arranged to align with an opening in the valve housing for the regulation of the amount of gas that is let into the valve housing.

Furthermore, the control valve can be equipped with a drive means to provide said rotation of the valve cup. Said drive means can be a cogged rod or a worm gear that is connected to a number of cogs or the like on the outside of the valve cup, and where the drive means can be connected to an actuator to control the control valve according to the rotational speed of the engine.

The valve housing can be placed inside the engine and adjoining the inlet manifold.

The invention shall now be described with the help of the enclosed figures, in which:
Figure 1 shows a known solution for a gas engine.
Figure 2 shows a principle outline of an embodiment example with a valve solution for a gas engine according to the invention.

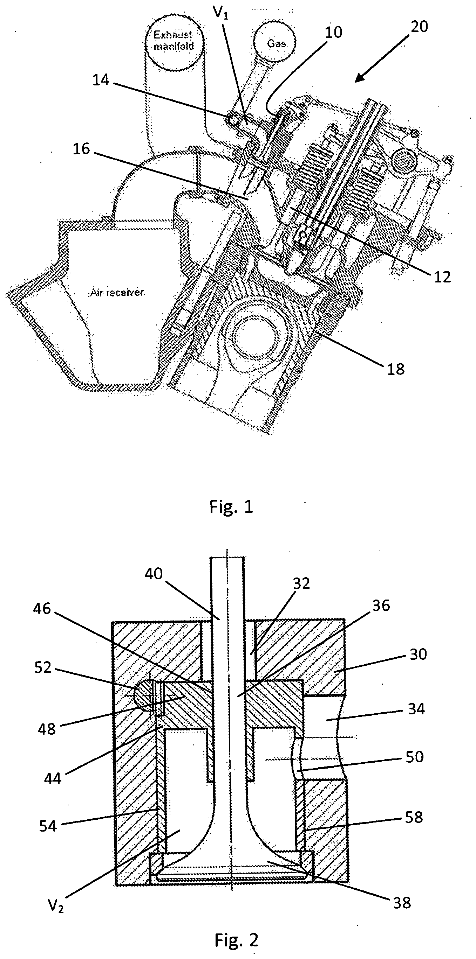

A gas engine is regarded to be known to a person skilled in the arts and is therefore not explained in more detail in the application. However, figure 1 is shown to explain a known set-up of valves according to what has been described previously. Here, a control valve 10 is placed in the engine 20 and adjoins an inlet manifold 16 that extends further to an inlet valve 12 to let gas further into the cylinder 18 of the engine. Furthermore, an admission valve 14 is placed in the gas inlet for letting in gas that takes up a volume V₁, between the control valve and the admission valve. This gas expands from the main gas pressure to the pressure of the inlet manifold 16 through the control valve and can, as mentioned, not be controlled by the control valve. The volume V₁ will often be around 120 cm³ in known gas engines.

Essential aspects and technical features according to the present invention of a gas engine are explained in more detail in the following in connection with figure 2.

Furthermore, it shall be pointed out that although the expression gas engine is used, this does not mean necessarily that the present invention is only directed towards a free standing gas engine, but can also be used on an engine arranged for both gas operation and operation with other fuels, i.e. a so called combination engine, as the gas supply system will, in the main, be similar regardless.

A suggestion for a solution is to place the valve stem for the admission valve concentrically around the stem for the control valve as shown in figure 2. In this way, the volume between the two valves for a given engine type, can be reduced, by around 90% compared with a traditional solution. The volume, which is given by V₁ in the known solution, can thereby be reduced to, for example, 15 cm³, shown as V₂.

The construction of a combined valve according to the invention for a lean burn medium speed gas engine shall now be explained in more detail.

A valve housing 30 comprises a control valve 44 and an admission valve 36, where the upstream control valve 44 is constructed for a rotating movement with a flow area that is revealed as the valve 44 is rotated, so that gas flows from the outside and in towards the centre. The downstream admission valve 36 is constructed for a linear movement with a valve disc 38 that closes against a valve seat (not shown).

In the embodiment shown, the control valve 44 is formed as a downwardly extending and open valve cup with a sidewall 54 and bottom 48, where the cup is placed in a boring 58 in the valve housing 30. The bottom 48 of the cup is, in the embodiment shown, directed upwards, while the mouth opening is directed downwards. Furthermore, the valve cup is equipped with at least one side opening 50, or several openings, which during rotation align with a gas opening 34 on the side of the valve housing 30 to let in gas. For the operation and rotation of the control valve 44, it can be equipped with, or connected to, a drive means 52, where the drive means 52 can be, for example, in the form of a cogged rod, worm gear or similar known solutions that engage with cogs on the valve cup of the control valve 44.

An upper part 40 (valve stem) of the admission valve 36 is arranged to move through a boring 46 in the bottom of the valve cup of the control valve 44, i.e. an upper part as shown in the figure, where the linear movement can be controlled by pushing the valve stem in a direction to open, and with a spring return to a closed position. The valve 36 can be mechanically connected with respective lifting arrangements for inlet valves 12. In the embodiment example shown, the admission valve 36 is, as mentioned, formed as a linearly moving valve stem with a lower valve disc 38 arranged to close against the valve seat for the control of the gas supply to the inlet manifold 16, and with an upper part 40 of the valve stem extending out through an upper boring 32 in the valve housing 30.

Control of the control valve 44 and the admission valve 36 can also be performed in a traditional, known way.

## Claims

1. Valve system for a gas engine (20) comprising a number of valves (36, 44) that are arranged to regulate the amount and supply of gas into an inlet manifold (16) in the engine (20), **characterised in that** the system comprises a valve housing (30) equipped with a centrally placed and linearly moving control valve (36) and a surrounding admission valve (44), where the admission valve (44) is arranged to rotate to regulate the amount of gas that is let into the valve housing (30).

2. Valve system according to claim 1,
**characterised in that** the control valve (36) is formed as a linearly moving valve stem with a lower valve disc (38) arranged to close against a valve seat for the control of the gas supply to the inlet manifold (16) and where an upper part (40) of the valve stem extends out through an upper boring (32) in the valve housing (30).

3. Valve system according to claims 1 and 2,
**characterised in that** the admission valve (44) is formed as a downwardly extending and open valve cup, in which the upper part (40) of the control valve (36) extends through a boring (46) in the bottom (48) of the valve cup.

4. Valve system according to claim 3,
**characterised in that** the valve cup of the admission valve (44) comprises, at least, one side opening (50) which, during rotation of the cup, is arranged to align with an opening (34) in the valve housing (30), for the regulation of the amount of gas that is let into the valve housing.

5. Valve system according to claim 4,
**characterised in that** the admission valve (44) is equipped with a drive means (52) to provide said rotation of the valve cup.

6. Valve system according to claim 5,
**characterised in that** said drive means (52) is a cogged rod or a worm gear that is connected to a number of cogs or the like on the outside of the valve cup and that the drive means is connected to an actuator to control the admission valve (44) according to the rotational speed of the engine.

7. Valve system according to claim 1,
**characterised in that** the valve housing (30) is placed inside the engine (20) and adjoins the inlet manifold (16).

## Patentansprüche

1. Ventilsystem für einen Gasmotor (20), umfassend eine Anzahl Ventile (36, 44), die angeordnet sind, um die Menge und Zufuhr von Gas in einen Einlasskrümmer (16) im Motor (20) zu regulieren, **dadurch gekennzeichnet, dass** das System ein Ventilgehäuse (30) umfasst, das mit einem mittig platzierten und sich linear bewegenden Steuerventil (36) und einem umgebenden Einlassventil (44) versehen ist, wo das Einlassventil (44) angeordnet ist, um zu rotieren, um die Gasmenge zu regulieren, die in das Ventilgehäuse (30) eingeleitet wird.

2. Ventilsystem nach Anspruch 1,
**dadurch gekennzeichnet, dass** das Steuerventil (36) als ein sich linear bewegender Ventilschaft mit einem unteren Ventilteller (38) ausgebildet ist, der angeordnet ist, um für die Steuerung der Gaszufuhr zum Einlasskrümmer (16) gegen einen Ventilsitz zu schließen, und wo ein oberer Teil (40) des Ventilschafts sich durch eine obere Bohrung (32) im Ventilgehäuse (30) nach außen erstreckt.

3. Ventilsystem nach Ansprüchen 1 und 2,
**dadurch gekennzeichnet, dass** das Einlassventil (44) als eine sich nach unten erstreckende und offene Ventilschale ausgebildet ist, in welcher der obere Teil (40) des Steuerventils (36) sich durch eine Bohrung (46) im Boden (48) der Ventilschale erstreckt.

4. Ventilsystem nach Anspruch 3,
**dadurch gekennzeichnet, dass** die Ventilschale des Einlassventils (44) zumindest eine Seitenöffnung (50) aufweist, welche angeordnet ist, um sich während einer Rotation der Schale mit einer Öffnung (34) im Ventilgehäuse (30) auszurichten, für die Regulierung der Menge an Gas, die in das Ventilgehäuse eingeleitet wird.

5. Ventilsystem nach Anspruch 4,
**dadurch gekennzeichnet, dass** das Einlassventil (44) mit einem Antriebsmittel (52) versehen ist, um für die Rotation der Ventilschale zu sorgen.

6. Ventilsystem nach Anspruch 5,
**dadurch gekennzeichnet, dass** das Antriebsmittel (52) eine gezahnte Stange oder ein Schneckengetriebe ist, die oder das mit einer Anzahl Zähne oder dergleichen auf der Außenseite der Ventilschale verbunden ist, und dass das Antriebsmittel mit einem Stellglied verbunden ist, um das Einlassventil (44) gemäß der Drehzahl des Motors zu steuern.

7. Ventilsystem nach Anspruch 1,
**dadurch gekennzeichnet, dass** das Ventilgehäuse (30) innerhalb des Motors (20) platziert ist und an den Einlasskrümmer (16) grenzt.

## Revendications

1. Système de soupapes pour un moteur à gaz (20) comprenant un certain nombre de soupapes (36, 44) qui sont agencées de manière à réguler la quantité de gaz et l'alimentation en gaz à l'intérieur d'un collecteur d'admission (16) dans le moteur (20), **caractérisé en ce que** le système comprend un compartiment de soupapes (30) qui est équipé d'une soupape de commande placée centralement et se déplaçant linéairement (36) et d'une soupape d'admission (44) qui entoure la soupape de commande, dans lequel la soupape d'admission (44) est agencée de manière à tourner afin de réguler la quantité de gaz qui est admise à l'intérieur du compartiment de soupapes (30).

2. Système de soupapes selon la revendication 1, **caractérisé en ce que** la soupape de commande (36) est formée en tant que tige de soupape se déplaçant linéairement qui est munie d'un disque de soupape inférieur (38) qui est agencé de manière à se fermer/plaquer contre un siège de soupape pour la commande de l'alimentation en gaz sur le collecteur d'admission (16) et dans lequel une partie supérieure (40) de la tige de soupape s'étend vers l'extérieur au travers d'un alésage supérieur (32) qui est ménagé dans le compartiment de soupapes.

3. Système de soupapes selon les revendications 1 et 2, **caractérisé en ce que** la soupape d'admission (44) est formée en tant que coupelle de soupape s'étendant vers le bas et ouverte, dans lequel la partie supérieure (40) de la soupape de commande (36) s'étend au travers d'un alésage (46) qui est ménagé dans le fond (48) de la coupelle de soupape.

4. Système de soupapes selon la revendication 3, **caractérisé en ce que** la coupelle de soupape de la soupape d'admission (44) comprend, au moins une ouverture latérale (50) qui, pendant la rotation de la coupelle, est agencée de manière à être alignée avec une ouverture (34) qui est ménagée dans le compartiment de soupapes (30), pour la régulation de la quantité de gaz qui est admise à l'intérieur du compartiment de soupapes.

5. Système de soupapes selon la revendication 4, **caractérisé en ce que** la soupape d'admission (44) est équipée d'un moyen d'entraînement (52) de manière à assurer ladite rotation de la coupelle de soupape.

6. Système de soupapes selon la revendication 5, **caractérisé en ce que** ledit moyen d'entraînement (52) est une tige dentée ou un engrenage à vis sans fin qui est connecté(e) à un certain nombre de dents ou similaire sur l'extérieur de la coupelle de soupape et **en ce que** le moyen d'entraînement est connecté à un actionneur de manière à commander la soupape d'admission (44) en fonction de la vitesse de rotation du moteur.

7. Système de soupapes selon la revendication 1, **caractérisé en ce que** le compartiment de soupapes (30) est placé à l'intérieur du moteur (20) et il jouxte le collecteur d'admission (16).
